# EUROPÄISCHE PATENTSCHRIFT

(11) **EP 0 750 152 B1**
(45) Veröffentlichungstag und Bekanntmachung des Hinweises auf die Patenterteilung: **01.12.1999**
(21) Anmeldenummer: 96108712.9
(22) Anmeldetag: 31.05.1996
(51) Int. Cl.: F16L 37/084, F16L 33/20, F16L 37/088, B60T 17/04

(54) **Steckverbindung für den Anschluss von Rohr- und Schlauchleitungen**
Plug-in connector for the connection of pipes and hoses
Raccord à fiche pour la connexion de tuyaux flexibles et tuyaux rigides

(30) Priorität: 22.06.1995 DE 19522690
(43) Veröffentlichungstag der Anmeldung: 27.12.1996
(73) Patentinhaber: DIPL.-ING. HENN GES.M.B.H. & CO.KG., A-6890 Lustenau (AT)
(72) Erfinder: Profunser, Herbert, 6832 Muntlix (AT)
(74) Vertreter: Riebling, Peter, Dr.-Ing.

(56) Entgegenhaltungen:
- EP-A- 0 444 304
- EP-A- 0 559 505
- DE-A- 3 729 570
- GB-A- 2 268 238
- US-A- 3 314 696

## Beschreibung

Die Erfindung betrifft eine Steckverbindung nach dem Oberbegriff des Patentanspruchs 1.

Durch die FR 2 667 922 und die EP-A-559505 ist eine derartige Steckverbindung bekannt geworden.

Hierbei besteht die Steckverbindung im wesentlichen aus einer Innenhülse, auf welche der Schlauch aufgeschoben ist, sowie aus einer auf die Außenseite des Schlauches geschobenen Außenhülse, wobei die beiden Hülsen etwa in der Mitte miteinander verbunden sind.

Zur Sicherung der Verbindung ist ferner ein Rohrstutzen vorhanden, der von außen über die Außenhülse geschoben wird und welcher ein Sicherungsmittel, in diesem Fall eine dreieckförmige Rastfeder, zur Sicherung der Steckverbindung zwischen Außenhülse und Rohrstutzen aufweist.

Dabei ist der Rohrstutzen mit drei gleichmäßig an seinem Außenumfang angeordneten und seine Wandung durchbrechenden Schlitzen ausgebildet. Diese Schlitze nehmen ca. 50 % von der Umfangslänge dieses Rohrstutzens ein.

Hieraus ergibt sich der erste Nachteil, daß zur Gewährleistung der erforderlichen Stabilität des Rohrstutzens nur ausgewählte Materialien mit entsprechenden Wanddicken eingesetzt werden können.

Bei den auf der Außenhülse befindlichen Nasen handelt es sich um Lappen, die aus dem Material der Außenhülse 3-seitig beschnitten sind und nach außen hervorragen, so daß die erforderliche Stabilität dieser Nasen nur durch Einsatz von ausgewählten Materialien mit entsprechender Materialstärke gewährleistet werden kann.

Durch die bereits vorbeschriebenen, drei relativ groß ausgebildeten Schlitze im Rohrstutzen, kann dieser Rohrstutzen in insgesamt drei verschiedenen Winkellagen auf die Außenhülse aufgeschoben und verrastet werden. Dies ist aber in verschiedenen Anwendungsfällen unerwünscht, weil eine genaue lagenrichtige Zuordnung der Kupplungsmittel erwünscht wird, was durch die in der FR 2 667 922 A1 beschriebenen Steckverbindung nicht gewährleistet ist.

Zudem ist die in dieser Steckverbindung verwendete dreieckförmige Rastfeder schwierig zu montieren und vor allem verlierbar auf dem Rohrstutzen angeordnet.

Um diese Kupplung zu öffnen, ist es notwendig, daß die Feder komplett vom Stutzen getrennt wird und zur Herstellung der Rastverbindung muß dann die Feder wieder separat umständlich montiert werden, was bei eingeengtem Einbauraum in Fahrzeugen die Umwandung unmöglich macht.

Die weiterhin in Betracht zu ziehende, in der FR 27 04 296 A1 beschriebene Steckverbindung, weist im wesentliche dieselben Nachteile wie die vorbeschriebene FR 2 667 922 A1 auf.

Auch dort ist die Schlitzlänge der Schlitze überproportional lang und es ist nicht möglich, ohne weitere Kupplungsmittel die Teile nur in einer einzigen Verdrehlage zusammenzustecken. Um dies zu erreichen, ist bei dieser Steckverbindung ein eigenes Kupplungsmittel, nämlich ein entsprechender Lappen vorgesehen, der an eine einzige, zugeordnete Ausnehmung an der Innenhülse eingreift.

Die Rastfeder ist bei dieser Steckverbindung genauso verlierbar, wie bei der vorbeschriebenen FR 2 667 922 A1.

Die weiterhin durch die FR 27 04 296 A1 vorbekannte Steckverbindung hat überhaupt keine Nase, sondern es ist vielmehr eine umlaufende Rastkerbe dargestellt, wobei die Feder dann durch Eingriff in die Schlitze in zusammengestecktem Zustand in die Rastkerbe einrastet.

Durch die EP 0 393 303 A2 ist ein weiterer Stand der Technik bekannt geworden, wobei es bei dieser erfindungsgemäßen Steckverbindung keine Feder-Anordnung gibt, sondern es sich um einen normalen Bajonett-Verschluß handelt, wobei durch Drehung einer entsprechenden Außenhülse die zugeordneten, die bajonettartigen Ausnehmungen in Eingriff mit zugeordneten Nasen am gegenüberliegenden Teil kommen sollen.

Es handelt sich also bei der vorbeschriebenen EP 0 393 303 A2 um keine Rastverbindung, sondern um eine, ohne Feder arbeitende, Drehkupplung.

Mit der DE 37 29 570 A1 ist eine weitere Steckverbindung bekannt, bei der bereits schon als Rastmittel eine Rastfeder verwendet wird, die ebenfalls durch entsprechende Schlitze im Rohrstutzen hindurchgreift. Allerdings ist die Rastfeder selbst nicht betätigbar, sondern die gesamte Verbindung ist durch Deformierung des Rohrstutzens selbst lösbar, mit welcher Deformierung dann auch die Rastfeder entsprechend geöffnet wird, um sie aus dem Rasteingriff im Bereich der Anlagekanten der Außenhülse zu bringen.

Eine derartige Verbindung ist aber nicht im Kraftfahrzeugbau für die Abdichtung von Kühlerschläuchen und dergleichen geeignet, sondern nur für relativ schwach dimenisionierte Entlüftungsleitungen und dergleichen mehr, wo geringe Durchmesser der Steckverbindung ausreichen und eine dementsprechende Deformierung der Steckteile gestattet ist.

Der Anmeldung liegt demzufolge die Aufgabe zugrunde, eine Steckverbindung ausgehend von der FR 26 67 922 A1 so weiterzubilden, daß die Verbindung auch bei relativ großen Durchmessern der Steckverbindung eine große Stabilität gewährleistet und mit einer speziell ausgebildeten Rastfeder arbeitet, welche unverlierbar am Rohrstutzen gelagert und die von Hand bedienbar ist.

Zur Lösung der gestellten Aufgabe ist die Erfindung durch die technische Lehre des Anspruchs 1 gekennzeichnet.

Ein weiteres Merkmal ist die Ausbildung der Nase als tiefgezogenes Sickenteil, so daß durch die wesentlich stabilere Nase die Außenhülse mit wesentlich geringerer Wandstärke ausgebildet sein kann und zudem auch bisher nicht einsetzbare Werkstoffe, wie beispielsweise Aluminium, Verwendung finden können.

Weiterhin ist wichtig, daß durch die Nasen-Ausbuchtungs-Anordnung ein Verdrehschutz vorhanden ist, wodurch der Rohrstutzen auf der Außenhülse nur in einer ganz bestimmten Drehlage aufgeschoben und verrastet werden kann, so daß eine genaue lagenrichtige Zuordnung der Kupplungsmittel gewährleistet ist.

Es ist weiterhin möglich, daß die Breite der Ausbuchtungen, ebenso wie die Breite der Nasen variabel sind, das heißt auf der einen Seite der Schlauchkupplung ist eine breite Ausbuchtung mit einer zugeordneten Nase vorhanden, während auf der anderen Seite der Schlauchkupplung eine schmale Ausbuchtung in einer zugeordneten schmalen Nase ausgebildet ist.

Diese Konstruktion gewährleistet, daß die Kupplung nur in einer einzigen Winkellage zusammengesteckt und verrastet werden kann und des weiteren keine anderen Kupplungsmittel benötigt werden.

In einer bevorzugten Ausgestaltung der Erfindung ist es vorgesehen, daß die etwa U-förmige Rastfeder einen mittleren Rundteil aufweist, der sich etwa dem Außendurchmesser des Rohrstutzens anpaßt, wobei aber der Durchmesser des Rundteils etwas kleiner gewählt ist als der Außendurchmesser des Rohrstutzens, um so eine federbelastete Vorspannung der Rastfeder am Außenumfang des Rohrstutzens zu gewährleisten.

Auf diese Weise wird sichergestellt, daß die Rastfeder mit jeweils einem zugeordneten Federschenkel in einen zugeordneten Schlitz im Rohrstutzen eingereift, welcher Schlitz als Durchbrechung des Rohrstutzens ausgebildet ist.

Vorzugsweise, ist die Rastfeder relativ schwach dimensioniert. Diese schwache Dimensionierung der Rastfeder wird dadurch erreicht, daß die Schlitzlänge der die Wandung des Rohrstutzens durchbrechenden Schlitze kurz ausgeführt ist.

Dies wird nach einem weiteren, Merkmal der vorliegenden Erfindung dadurch erreicht, daß die Schlitze nicht unmittelbar in der Rohrwandung des Rohrstutzens selbst angeordnet sind, sondern im Bereich von trapezförmigen Ausbuchtungen, die sich radial auswärts von der Rohrwandung des Rohrstutzens erstrecken und wobei die genannten Schlitze im Bereich dieser Ausbuchtungen vorhanden sind.

Damit ergibt sich der wesentliche Vorteil, daß im Vergleich zu den bekannten Schlitzlängen die erfindungsgemäße Schlitzlänge nur noch etwa 1/3 bis 1/5 der Länge der bekannten Schlitzlängen aufweisen muß und daher auch die Rastfeder durch diesen kurzen Schlitz nur schwach dimensioniert werden kann.

Bei den wesentlich längeren Schlitzen nach dem Stand der Technik, welche die Wandungen des Rohrstutzens durchbrechen, ist nämlich die Abstützung der Rastfeder im Bereich dieses Schlitzes nur an der vorderen und hinteren Schlitzkante gegeben. Dazwischen liegt die Rastfeder mit einem relativ großen, ununterstützten Querschnitt, so daß eine in axialer Richtung auf die ununterstützte Länge der Feder wirkende Kraft von einem relativ großen Federquerschnitt aufgenommen werden muß, um eine unzulässige Durchbiegung der Rastfeder und damit ein unzulässiges Lösen der Rastverbindung zu vermeiden.

Dies vermeidet eine Weiterbildung der vorliegenden Erfindung dadurch, daß sie den Schlitz radial auswärts in eine radial auswärts gelegene Ausbuchtung in der Wandung des Rohrstutzens verlegt, wodurch die Rastfeder nur noch im Bereich dieser in Umfangsrichtung radial kurz ausgebildeten Ausbuchtung die Materialstärke des Rohrstutzens durchgreift, wobei die entsprechende Stützlänge der Rastfeder dementsprechend auch kurz ausgebildet ist.

Damit ergibt sich also der Vorteil, daß man den Rastfederquerschnitt nun klein dimensionieren kann und dementsprechend auch schwach dimensionieren kann, ohne die Funktion der Rastverbindung zu gefährden.

Damit ergibt sich dann der weitere Vorteil, daß die Rastfeder nun werkzeuglos, mit bloßer Hand zu bedienen ist und sie sehr kostengünstig ausgeführt werden kann.

Durch die Möglichkeit der Betätigung der Rastfeder mit bloßer Hand und ohne Werkzeug wird es bevorzugt, die Rastfeder unverlierbar am Rohrstutzen zu halten.

Die Unverlierbarkeit wurde vorstehend schon beschrieben, sie wird im wesentlichen dadurch erreicht, daß die Feder sich mit ihrem runden Mittelabschnitt unter Federspannung an dem Außenumfang des Rohrstutzens anlegt und im übrigen mit etwa geraden ausgebildeten Federschenkeln in die zugeordneten Schlitze im Bereich der Ausbuchtungen des Rohrstutzens einlegt und dort unter Federkraft anliegt.

Im übrigen liegen dann die aus den Schlitzen herausragenden Federenden am Außenumfang des Rohrstutzens an und können mit entsprechenden Handhabungen versehen sein, um die Feder leicht betätigen zu können.

Selbst wenn zwei einander gegenüberliegende Schlitze am Außenumfang des Rohrstutzens vorgesehen sind, reicht es aus, die Rastfeder an einem Ende entsprechend in Umfangsrichtung des Rohrstutzens zu verschieben, um so eine radiale Aufspreizung zu gewährleisten und die Federschenkel, welche in die Schlitze eingreifen, außer Eingriff mit den zugeordneten Anlagekanten an der Außenhülse zu bringen.

Ein einseitiges Angreifen an der Rastfeder reicht also aus, um die Rastverbindung zu lösen und es bedarf demzufolge nicht mehr einer vollständigen Entfernung der Rastfeder aus der Rastverbindung heraus, was die Rastfeder verlierbar machen würde.

In einer Weiterbildung der Erfindung ist es im übrigen vorgesehen, daß bei einer Verschiebung zwecks Aufspreizung der Feder in Umfangsrichtung des Rohrstutzens an der äußeren Mantelfläche des Rohrstutzens entsprechende Rastnocken vorhanden sind, in welche das betätigte Federende der aufgespreizten Feder einrasten kann, um so die Feder vor einem unerwünschten Zurückverformen zu schützen. D. h. also die Feder wird durch diese Rastnocke in einer geöffneten Spreizstellung gehalten, so daß die Steckverbindung einhändig und ohne Werkzeug geöffnet und geschlossen werden kann.

Die beschriebene Rastfeder muß nicht aus einem Metallmaterial gefertigt sein, sondern sie kann auch als Kunststoffteil oder als Kunststoffclip ausgebildet sein.

In einer Weiterbildung der vorliegenden Erfindung ist vorgesehen, daß die Rastfeder nicht aus einer metallischen Feder besteht, sondern aus einem Kunststoffteil, welches ein- oder mehrstückig mit dem Rohrstutzen verbunden ist.

Dieses Kunststoffteil, welches nachfolgend als Rastzunge bezeichnet wird, kann also als separates Teil mit dem Außenumfang des Rohrstutzens verbunden werden; in einer anderen Ausführungsform kann es aber auch einstückig mit dem Rohrstutzen selbst verbunden sein.

Bei dem beschriebenen Ausführungsbeispiel handelt es sich um eine Dreh-Steckkupplung.

Bei dieser Verbindungsart werden die beiden ineinandergesteckten Teile, nämlich die Außenhülse und der Rohrstutzen zunächst im Bereich von einander zugeordneten formschlüssigen Teilen (Nasen und Ausbuchtungen) ineinandergesteckt, dann in Umfangsrichtung zueinander verdreht.

Zur Sicherung dieser Drehverbindung wird die vorher beschriebene Rastzunge verwendet, die am Außenumfang des Rohrstutzens angeordnet ist und die sich mit einer Kante durch einen entsprechenden Schlitz (Rastöffnung) des Rohrstutzens hindurch in Richtung auf die darunter angeordnete Außenhülse erstreckt und dort an einer zugeordneten Anschlagkante anliegt.

Auch diese Verbindung ist werkzeuglos und einhändig zu betätigen und hat die gleichen Vorteile und Merkmale wie sie vorstehend anhand des ersten Ausführungsbeispieles beschrieben wurden.

Ein zusätzlicher Vorteil besteht darin, daß man die Rastzunge werkstoffeinstückig mit dem Rohrstutzen ausbilden kann, um so zusätzliche Teile einzusparen.

Im folgenden wird die Erfindung anhand von mehrere Ausführungswege darstellenden Zeichnungen näher erläutert. Hierbei gehen aus den Zeichnungen und ihrer Beschreibung weitere Merkmale und Vorteile der Erfindung hervor.

Es zeigen:
- Figur 1:: Teilschnitt einer Rohrverbindung in einem ersten Ausführungsbeispiel, wobei entlang der Linie I-I in Figur 2 geschnitten wurde;
- Figur 2:: Teilschnitt der Rohrverbindung nach Figur 1, wobei entlang der Linie II-II in Figur 1 geschnitten wurde;
- Figur 3:: Halbschnitt durch eine zweite Ausführungsform einer Steckverbindung nach der Erfindung;
- Figur 4:: Draufsicht auf die Anordnung nach Figur 3 in Richtung des Pfeiles IV;
- Figur 5:: Schnitt gemäß der Linie VIa-VIa in Figur 3;
- Figur 6a:: Schnitt gemäß der Linie VIa-VIa in Figur 3 bei einem abgewandelten Ausführungsbeispiel im Vergleich zu Figur 5;
- Figur 6b:: Schnitt gemäß der Linie VIb-VIb in Figur 3 durch das abgewandelte Ausführungsbeispiel;
- Figur 7:: Ansicht der Rastfeder zur Steckverbindung nach den Figuren 1 und 2 im Schnitt,
- Figur 8:: Draufsicht auf die Rastfeder nach Figur 7 in entspanntem Zustand,
- Figur 9:: Draufsicht auf den Rohrstutzen ohne Rastfeder-Anordnung,
- Figur 10:: Draufsicht auf den Rohrstutzen mit geschlossener Rastfeder-Anordnung,
- Figur 11:: Draufsicht auf den Rohrstutzen mit geöffneter Rastfeder-Anordnung.

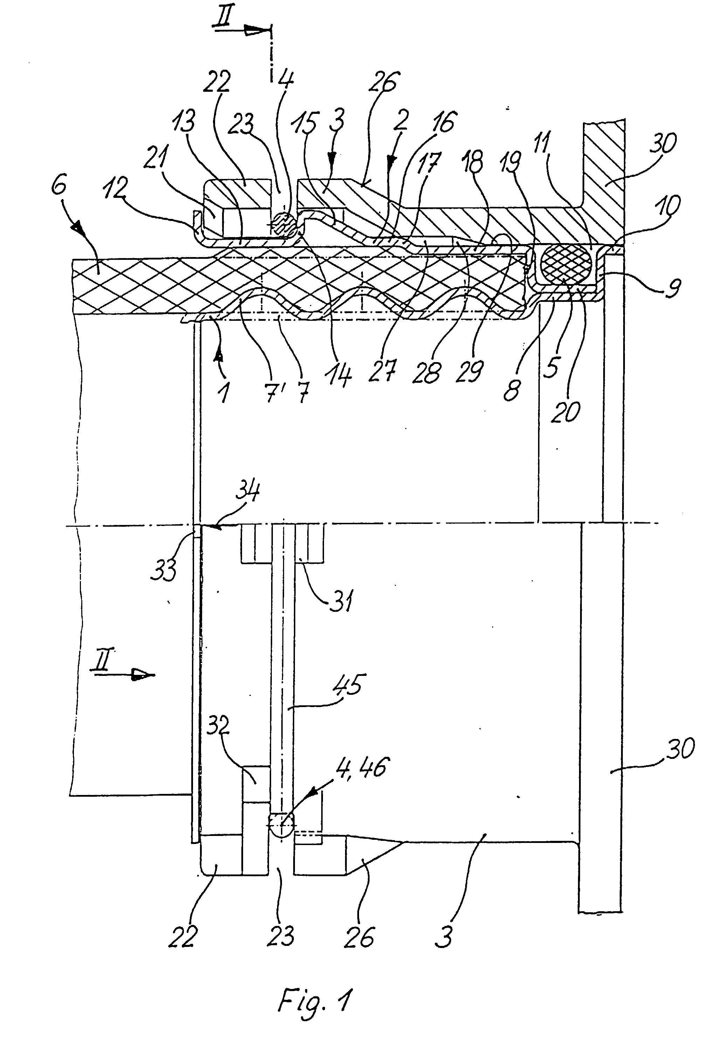

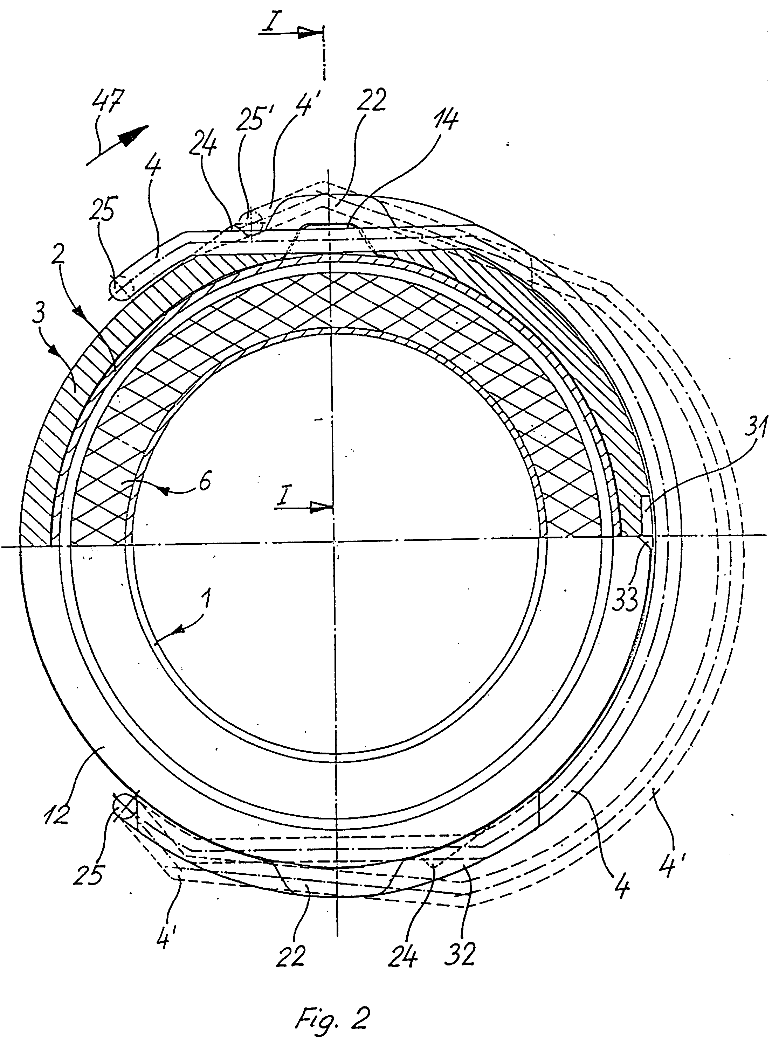

Gemäß den Figuren 1 und 2 besteht die Steckverbindung im wesentlichen aus einer Innenhülse 1, aus einer Außenhülse 2 und aus einem über die Außenhülse 2 gesteckten Rohrstutzen 3.

In den Innenraum des Schlauches 6 ist die Innenhülse 1 eingesteckt und weist zunächst bevorzugt eine durchgehende, glatte Wandung 7 auf, wie dies in Figur 1 in gestrichelten Linien dargestellt ist. Es wird hierbei bevorzugt, die Wandung 7 der Innenhülse durch ein Rolldrückverfahren so zu verformen, daß sich umlaufende Verformungsnuten ergeben, so wie dies mit dem Bezugszeichen 7' in Figur 1 dargestellt ist.

Durch dieses Verfahren wird die Innenhülse so aufgeweitet, daß der Durchflußquerschnitt des Schlauches auch im Kupplungsbereich beibehalten wird.

Die Innenhülse bildet an ihrem axialen hinteren Ende einen umlaufenden, etwa horizontalen Bund 8 auf, der in einen in radialer Richtung weisenden Bund 9 übergeht, der seinerseits wieder in einen in axialer Richtung weisenden Ringbund 10 übergeht. Auf diese Weise bildet die Innenhülse 1 mit den zugeordneten Teilen der Außenhülse 2 eine Ringnut 11, in welcher ein verformbarer Dichtring 5 eingelegt ist.

Die Außenhülse 2 wird auf den Außenumfang des Schlauches 6 aufgeschoben und bildet an ihrem axialen hinteren Ende einen in radialer Richtung weisenden Bund 19, der als Anschlag für die Stirnfläche des Schlauches 6 dient.

Dieser Bund 19 geht in einen in axialer Richtung weisenden Bund 20 über und die beiden aufeinanderliegenden Bünde 8,20 sind durch ein Preßfügeverfahren miteinander verbunden.

Statt dieses Verfahrens kann auch eine Schweißverbindung oder andere bekannte Verbindungsformen verwendet werden.

Die Außenhülse 2 bildet an ihrem axialen vorderen Ende einen radial auswärts gebogenen Anschlag 12 für die zugeordnete Stirnkante des draufgeschobenen Rohrstutzens 3.

Ausgehend von diesem Anschlag 12 schließt sich daran ein horizontaler, in axialer Richtung weisender Teil 13 an, der seinerseits in eine in radialer Richtung weisende Nase 14 übergeht. Es sind hierbei ein oder mehrere Nasen 14 am Umfang der Außenhülse 2 verteilt angeordnet. Im gezeigten Ausführungsbeispiel sind hierbei zwei Nasen 14 verwendet.

Die Nase 14 geht in eine Schräge 15 erweiterten Durchmessers über, welche seinerseits in ein axial gerichtetes Teilstück 16 gleichen Durchmessers wie Teil 13 übergeht, welches seinerseits wiederum über einen Absatz 17 in ein weiteres axiales Teilstück 18 verringerten Durchmessers übergeht.

Zur Herstellung der Rastverbindung ist nun wichtig, daß aus der Rohrwandung des Rohrstutzens 3 in radialer Richtung auswärts gebogene Ausbuchtungen 22 vorhanden sind, die in der gleichen Anzahl wie die zugeordneten Nasen 14 vorgesehen sind.

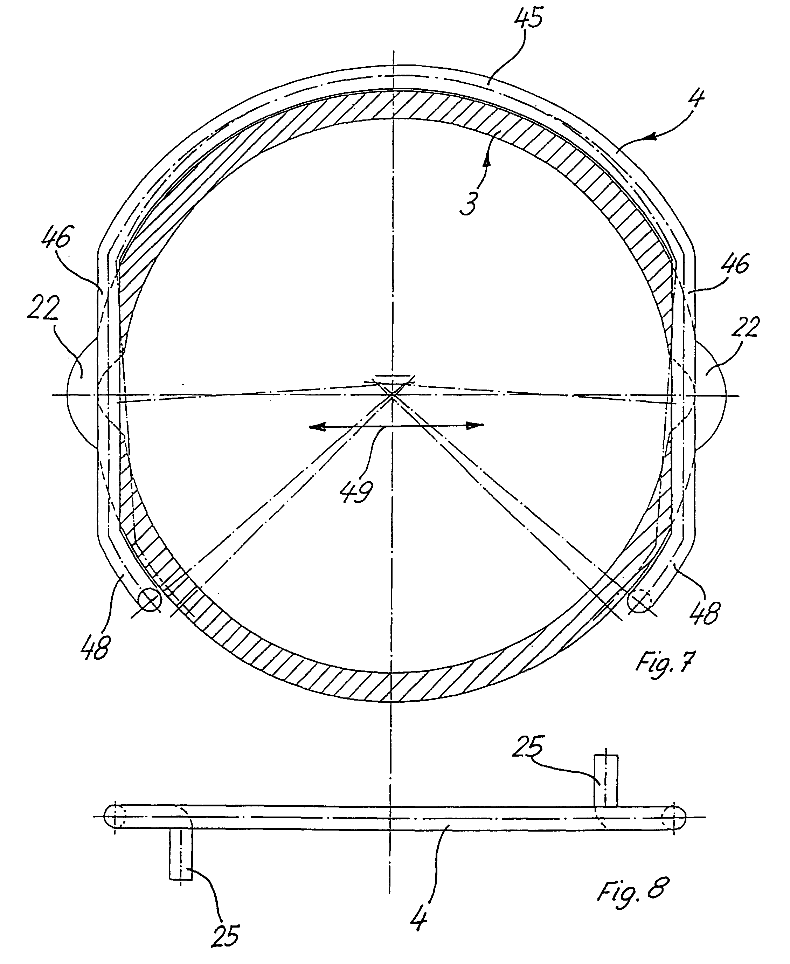

Im Bereich jeder Ausbuchtung 22 ist hierbei ein Durchbruch 23 angeordnet, welcher die Materialstärke der Wandung des Rohrstutzens 3 durchbricht. Im Bereich dieses Durchbruches 23 greifen die Rastfedern 4 mit zugeordneten Federschenkeln 46 (Figur 7) ein, wobei erkennbar ist, daß sich diese Federschenkel an die in radialer Richtung weisende Nase 14 der Außenhülse 2 jeweils anlegen.

Damit wird die Steckverbindung gegen axiales Auseinanderziehen und Verdrehen geschützt.

Um die Rastverbindung leichtgängig zu gestalten, ist demzufolge die Schräge 15 in axialem Anschluß an die Nase 14 vorgesehen, damit die Federschenkel, welche auf dieser Schräge 15 abrutschen möglichst leichtgängig gespreizt werden, um danach hinter die Nase 14 zur Anlage zu kommen.

Damit der Rohrstutzen 3 leicht auf die Außenhülse 2 aufgeschoben werden kann, weist seine vordere Stirnseite eine Anschrägung 21 auf.

In Figur 2 ist die Rastfeder 4 in zwei verschiedenen Verformungszuständen gezeigt, nämlich einmal in Raststellung und einmal in Offenstellung. Die Offenstellung ist hierbei in gestrichelter Darstellung dargestellt und die jeweils zugehörenden Teile sind mit einfachem Strich gekennzeichnet.

Zur Betätigung der Rastfeder weist diese an ihren Enden jeweils federabgebogene Federenden 25 auf, wobei aber lediglich ein einziges Federende, in Figur 2 z. B. das obere Federende 25, betätigt werden muß.

Wird dieses Federende 25 in Pfeilrichtung 47 mit der Hand verschoben, dann wird die Rastfeder 4 in ihrer Stellung 4' aufgespreizt und gleichzeitig gelangt hierbei das Federende in seine Stellung 25' und rastet hierbei hinter eine Rastnocke 24 an, die an der Mantelfläche des Rohrstutzens 3 aufgebaut ist und die radial nach außen weist, um so das Federende 25 gegen ein unbeabsichtigtes Zurückverschieben in Gegenrichtung zur Pfeilrichtung 47 zu schützen.

Gleichzeitig ist erkennbar, daß sich die Rastfeder 4 mit in die jeweiligen Durchbrüche 23 eingreifenden Federschenkeln 46 (vgl. Figur 7) aus diesen Durchbrüchen 23 herausbewegt, so daß die Nasen 14 freikommen und hierbei die Steckverbindung ohne weitere Hilfsmittel abgezogen werden kann.

Wichtig hierbei ist, daß mit dem Betätigen am oberen Ende 24 auch gleichzeitig der untere Federschenkel der Rastfeder 4 (in Figur 2 untenliegend) aus dem Durchbruch 23 bewegt und ebenfalls die unten liegende Nase 14 freigibt, ohne daß es einer besonderen Betätigung am unteren Federende 25 bedarf.

Wichtig hierbei ist, daß das untere Federende 25 in seiner eingezeichneten Stellung verbleibt und sozusagen als Drehlager wirkt, so daß also die Rastfeder am Außenumfang des Rohrstutzens 3 verbleibt und dort unverlierbar aufgrund ihrer Federspannung gehalten ist.

Um den Übergang von der Wandung des Rohrstutzens verminderten Durchmessers in den Bereich der Ausbuchtungen 22 zu gewährleisten ist vorgesehen, daß dieser Übergang durch Keilflächen 26 gebildet wird (Figur 1).

Aus Figur 1 ist im übrigen erkennbar, daß die Außenhülse 2 in ihrem vorderen Bereich eine Dicht- und Führungsfläche 29 zwischen dem entsprechenden Außenumfang der Außenhülse und dem Innenumfang des Rohrstutzens 3 ausbildet. In axialer Richtung hinter dieser Dicht- und Führungsfläche schließt sich dann eine Schräge 28 an, die in den Innenumfang des Rohrstutzens 3 eingearbeitet ist, die ihrerseits in eine Freistelllung 27 am Innenumfang des Rohrstutzens 3 übergeht.

Der Rohrstutzen 3 kann im übrigen Teil einer Wand oder eines anderen ortsfesten Teils sein und unmittelbar werkstoffeinstückig mit dieser Wand 30 verbunden sein.

Sollte es vorkommen, daß das Federende 25 zur Betätigung der Rastfeder 4 nicht zugänglich ist, dann ist noch zusätzlich am Außenumfang des Rohrstutzens 3 eine Ausnehmung 31 vorgesehen, in welche in axialer Richtung mit einem Werkzeug eingegriffen werden kann, um z. B. mit einem Schraubendreher die Rastfeder 4 im Bereich ihres Rundteiles 45 zu spreizen, um so ebenfalls die Rastverbindung zu lösen.

Um ein lagerichtiges Einstecken von der Außenhülse 2 in den Rohrstutzen 3 zu erleichtern, ist eine entsprechende Markierung 34 auf dem Rohrstutzen 3 angeordnet.

Die Kerbe 33 an der Außenhülse 2 ist hierbei der Markierung 34 zugeordnet.

Als Seitenführung für die Feder als Sicherung gegen axiale Verschiebung im geöffneten Zustand der Rastfeder 4 sind hierbei ein oder mehrere Führungen 32 am Außenumfang des Rohrstutzens 3 angeordnet, die sich seitlich an die Rastfeder 4 im Bereich des Rundteiles 45 anlegen.

Zusätzlich können diese Führungen 32 als Versteifungen für die Ausbuchtungen 22 im Rohrstutzen 3 aufgefaßt werden.

Die Rastfeder 4 besteht gemäß Figur 7 im wesentlichen aus einem Rundteil 45, welches sich unter Federspannung am Außenumfang des Rohrstutzens 3 anlegt. An den beiden Endteilen des Rundteils 45 schließen sich relativ gerade ausgebildete und im wesentlichen parallel zueinander verlaufende Schenkel 46 an, welche zum Eingriff in die Durchbrüche 23 am Rohrstutzen geeignet sind und welche die Rastverbindung herstellen.

An diese Schenkel 46 schließen sich weitere, etwa in Umfangrichtung gebogene Schenkel 48 an, die aus den Durchbrüchen 23 des Rohrstutzens 3 herausragen und die sich ebenfalls am Außenumfang des Rohrstutzens 3 klemmend anlegen.

Die Schenkel 48 ihrerseits sind durch die vorher erwähnten abgebogenen Federenden 25 begrenzt.

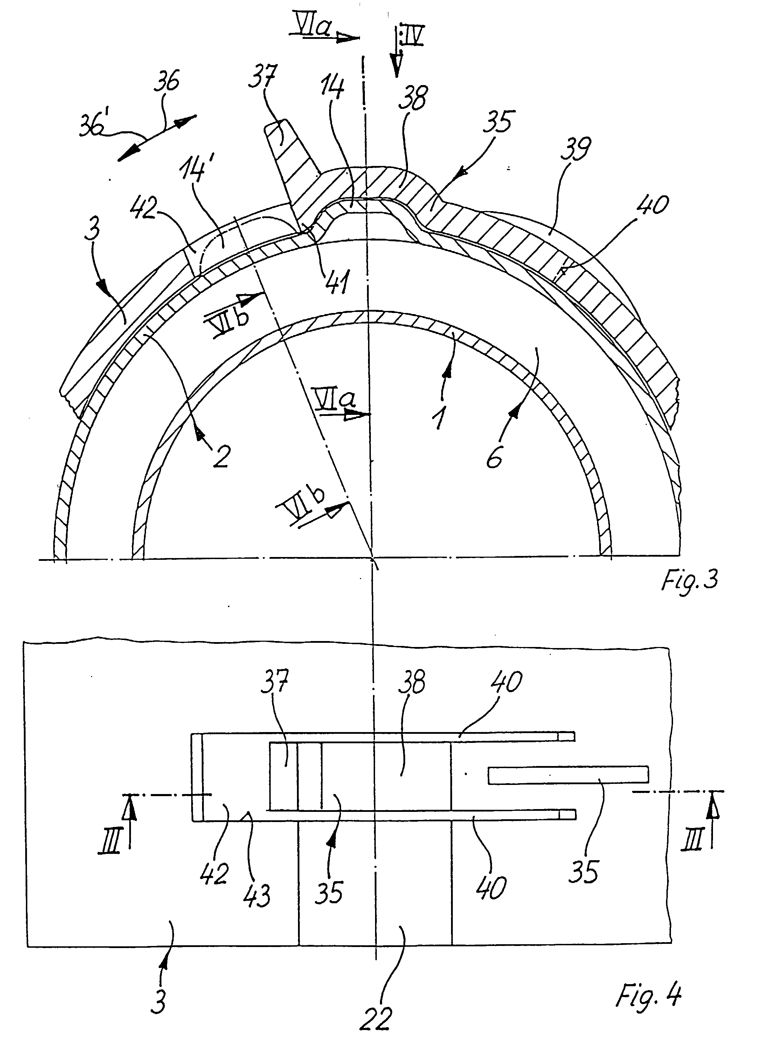

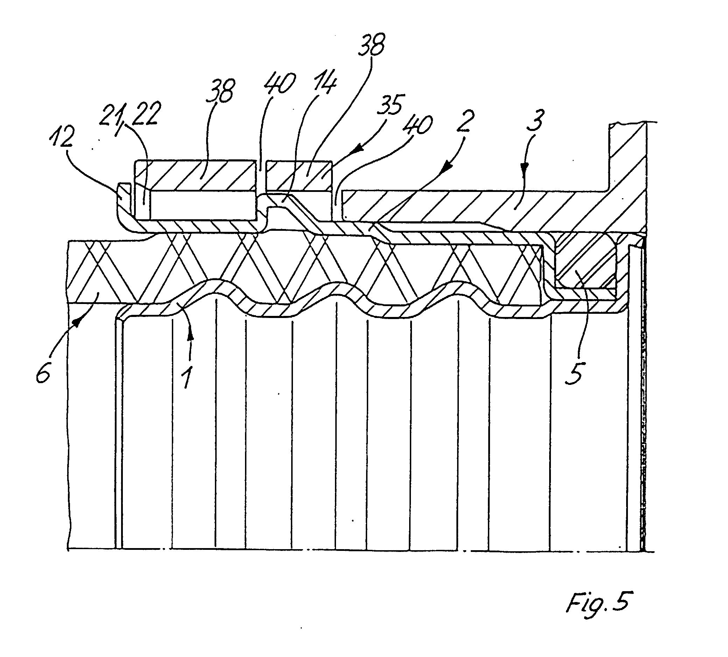

In den Figuren 3-6 wird ein weiteres Ausführungsbeispiel der Erfindung beschrieben, wobei eine Dreh-Steckkupplung beschrieben wird.

Als Sicherungsmittel für dies Dreh-Steckkupplung dient eine Rastzunge 35, die die gleichen Vorteile wie die vorher beschriebene Rastfeder 4 aufweist.

Gemäß den Figuren 3-5 besteht die Rast-Steckverbindung im wesentlichen aus einer Innenhülse 1 und aus einer Außenhülse 2, die im Sinne der vorstehenden Beschreibung wieder an ihrem einen Ende miteinander verbunden sind. Es wird zur Verbindung wiederum ein Rohrstutzen 3 verwendet, an welchem die Rastzunge 35 befestigt ist.

Die Nasen 14 sind wiederum am Außenumfang der Außenhülse 2 in radialer Richtung vorstehend angeordnet und wirken mit Ausbuchtungen 38 der Rastzunge 35 zusammen, wobei die hier beschriebenen Ausbuchtungen 38 in der Rastzunge sich als zugeordnete Ausbuchtungen 22 entlang des Rohrstutzens fortsetzen.

Wird der Steckteil mit Innenhülse und Außenhülse 1,2 in Pfeilrichtung 36' (Figur 3) verdreht, dann wird die Rastzunge 35 ausgehoben und die Kante 41 der Rastzunge 35 gelangt hinter der Nase 14 zum Eingriff, so wie dies in Figur 3 in gestrichelten Linien dargestellt ist.

In gestrichelten Linien ist hierbei die Außenhülse 2 mit Nase 14' in eingestecktem und verdrehtem Zustand dargestellt, während in durchgezogenen Linien die Außenhülse 2 mit Nase 14 nur eingesteckt, jedoch nicht verdreht dargestellt ist.

In durchgezogenen Linien ist also die noch nicht hergestellte Einrastposition dargestellt.

Die genannte Dreh-Steckverbindung wird also durch Eingreifen der Kante 41 hinter die Nase 14 gegen erneutes Verdrehen in Offenstellung (Rückdrehen) gesichert.

Soll diese Drehverbindung wieder geöffnet werden, dann wird an dem Griffteil 37 der Rastzunge 35 angefaßt und dieses wird angehoben, um die Kante 41 außer Eingriff mit der Nase 14 zu bringen.

Zur Verbesserung des Biegeverhaltens der Rastzunge können noch zusätzliche Versteifungsrippen 39 auf der Rastzunge 35 angeordnet werden, die bevorzugt werkstoffeinstückig mit dem Material des Rohrstutzens 3 ausgebildet sind.

Um die Rastzunge 35 überhaupt federnd zu gestalten ist es notwendig, Freistellungen vorzusehen, die als Schlitze 40 ausgebildet sind, welche parallel zueinander in Umfangsrichtung verlaufen und zwischen sich die federnde Rastzunge 35 definieren.

Die Schlitze münden in die Rastöffnung 42, in welche die Rastzunge 35 einrastet. Zur Sicherung gegen axiales Herausziehen legt sich hierbei die Nase 14 der Außenhülse an die Stützkante 43 des Rohrstutzens 3 an und sichert die gesamte Steckverbindung.

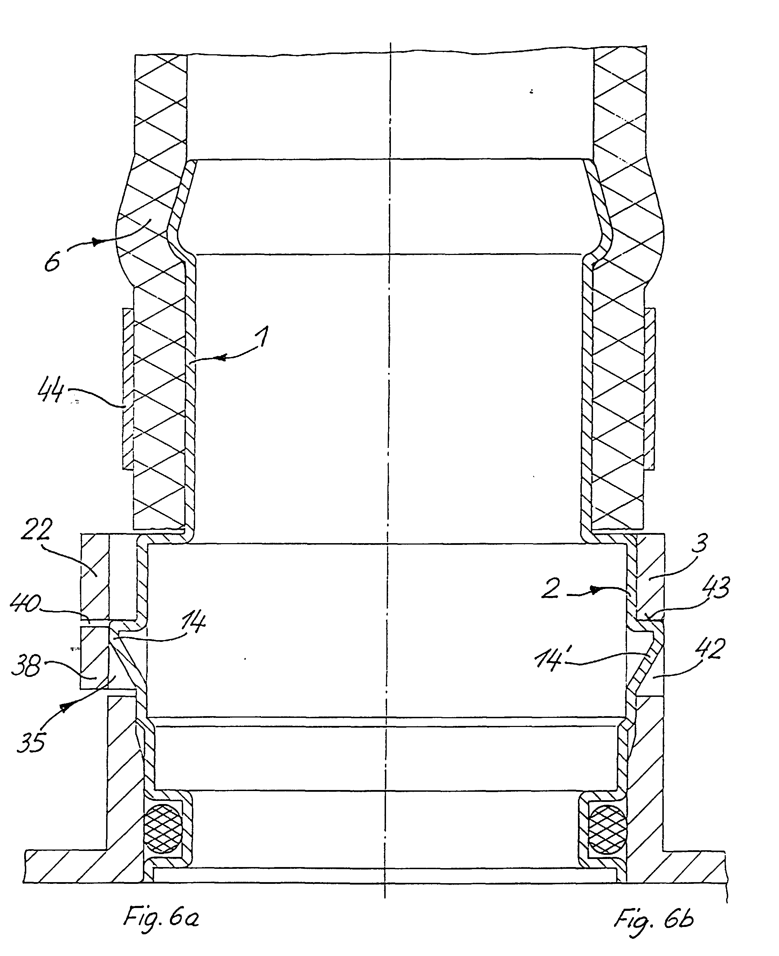

In Figur 6a,6b ist als Erweiterung des eben beschriebenen Ausführungsbeispieles gezeigt, daß die Außenhülse 2 nicht notwendigerweise die in den Figuren 3-5 dargestellte Formgebung haben muß, sie kann auch entsprechend den Figuren 6a,6b abgewandelt werden.

Hierbei ist erkennbar, daß auch die Innenhülse 1 im wesentlichen entfallen ist und die vorher beschriebene Außenhülse sowohl als Außenhülse als auch als Innenhülse dient.

Dies ist im oberen Bereich der Figuren 6a,6b erkennbar, wo die Außenhülse 2 im Durchmesser so stark vermindert ist, daß auf sie der Schlauch 6 aufgeschoben werden kann, wodurch diese dann als Innenhülse fungiert. Die beiden Teile 1,2 sind aber werkstoffeinstückig miteinander verbunden, wobei erkennbar ist, daß die Außenhülse 2 in der vorher beschriebenen Art die Nasen 14 ausgebildet, die mit der vorher beschriebenen Rastzunge 35 zusammenwirken.

Es wird hierbei bevorzugt, wenn lediglich eine einzige Rastzunge 35 am Rohrstutzen 3 angeordnet ist.

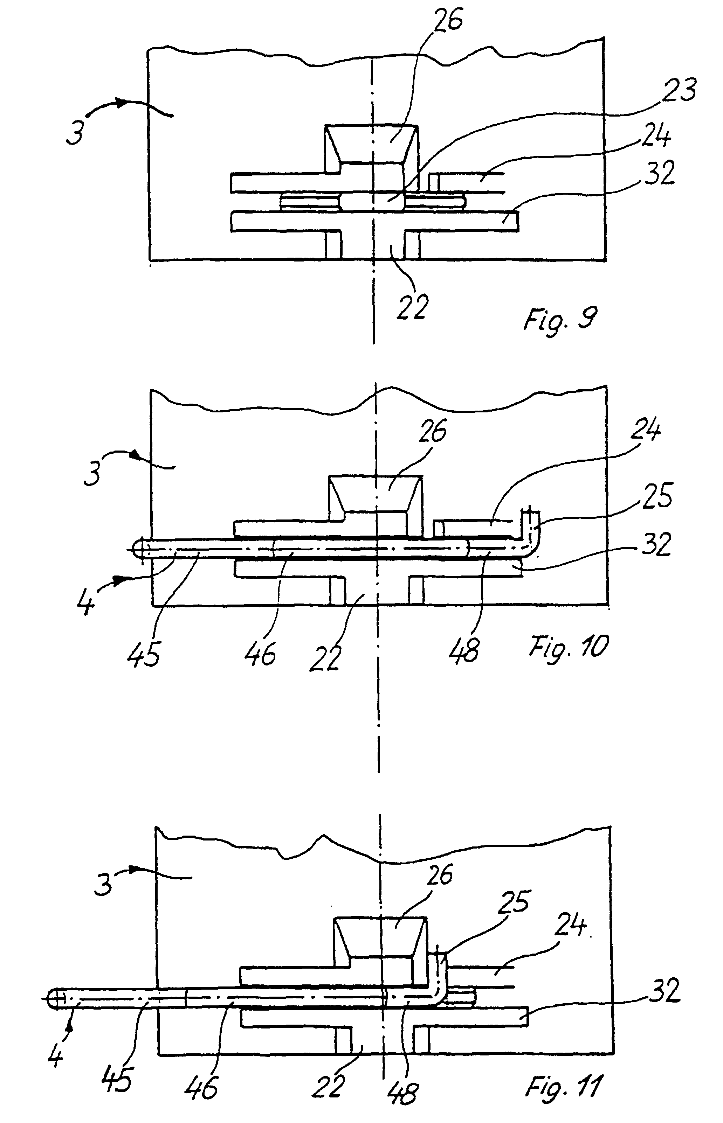

Die Ausbildung des Rohrstutzens 3 mit oder ohne Rastfeder-Anordnung 4 für die Einhandbedienung ist aus den Figuren 9 bis 11 zu entnehmen.

Die spezielle, bereits vorbeschriebene Ausbildung des Rohrstutzens 3 mit der Ausbuchtung 22, dem Durchbruch 23, der Rastnocke 24, der Keilfläche 26 und der Führung 32 ist in Figur 9 dargestellt.

Aus Figur 10 ist die Anordnung der Rastfeder 4 auf dem Rohrstutzen 3 in Raststellung verdeutlicht. Es ist ersichtlich, daß das obere federabgebogene Federende 25 hinter der Rastnocke 24 und der Mantelfläche des Rohrstutzens 3 anrastet, so daß ein unbeabsichtigtes Rückverschieben der Rastfeder 4 in Offenstellung nicht möglich ist.

In Figur 11 ist dagegen die Anordnung der Rastfeder 4 auf den Rohrstutzen 3 in Offenstellung schematisiert aufgezeigt, wobei das obere Federende 25 zwischen der Rastnocke 24 und der trapezförmigen Ausbuchtung 22 des Rohrstutzens 3 arretiert ist. Die Änderung der Stellung der Rastfeder 4 von Rast- auf Freigabeposition auf dem Rohrstutzen 3 ist mittels Einhand-Druckeinwirkung in Pfeilrichtung 47 (Figur 2) auf das obere Federende 25 der Rastfeder 4, ebenso wie die Änderung der Stellung der Rastfeder 4 von Freigabe- auf Rastposition auf dem Rohrstutzen 3 durch
Einhand-Druckeinwirkung auf das Rundteil 45 der Rastfeder 4 in Richtung zur Mantelfläche des Rohrstutzens 3 möglich.

### Zeichnungslegende

- 1: Innenhülse
- 2: Außenhülse
- 3: Rohrstutzen
- 4: Rastfeder
- 5: Dichtring
- 6: Schlauch
- 7: Wandung (von 1) 7'
- 8: Bund
- 9: Bund
- 10: Ringbund
- 11: Ringnut
- 12: Anschlag
- 13: Teil
- 14: Nase 14'
- 15: Schräge
- 16: Teilstück
- 17: Absatz
- 18: Teilstück
- 19: Bund
- 20: Bund
- 21: Anschrägung
- 22: Ausbuchtung
- 23: Durchbruch
- 24: Rastnocke
- 25: Federende
- 26: Keilfläche
- 27: Freistellung
- 28: Schräge
- 29: Dicht- und Führungsfläche
- 30: Wand
- 31: Ausnehmung
- 32: Führung
- 33: Kerbe
- 34: Markeirung
- 35: Rastzunge
- 36: Pfeilrichtung 36'
- 37: Griffteil
- 38: Ausbuchtung
- 39: Versteifungsrippe
- 40: Schlitz
- 41: Kante
- 42: Rastöffnung
- 43: Stützkante
- 44: Quetschring
- 45: Rundteil
- 46: Schenkel
- 47: Pfeilrichtung
- 48: Schenkel
- 49: Pfeilrichtung

## Patentansprüche

1. Steckverbindung für den Anschluß von Rohr- und Schlauchleitungen, insbesondere zur Verwendung für Rohrleitungssysteme von Kraftfahrzeugen, bestehend aus einer Innenhülse (1) und einer Außenhülse (2), welche zwischen sich eine Rohr- oder Schlauchleitung (6) aufnehmen, so daß ein Rohrstutzen (3) über die Außenhülse (2) geschoben werden kann, der mit Hilfe eines Sicherungsmittels mit der Außenhülse (2) verrastbar ist, wobei der Rohrstutzen (3) an seinem Außenumfang mindestens eine radiale, in Längsrichtung verlaufende Ausbuchtung (22) besitzt und der Rohrstutzen (3) im Bereich der Ausbuchtung (22) in Umfangsrichtung einen Durchbruch (23) aufweist, durch welchen ein Teil des Sicherungsmittels hindurchgreift, wobei der Ausbuchtung (22) eine an der Außenhülse (2) befindliche Nase (14) zugeordnet ist, mit der das Sicherungsmittel zusammenwirkt, **dadurch gekennzeichnet,** daß diese mindestens eine Nasen-/ Durchbruch-Anordnung (14, 23) an der Außenhülse/ im Rohrstutzen (2, 3) mit einer auf dem Rohrstutzen (3) in einer, durch die jeweilige Ausbuchtung (22) ausgebildeten Verschiebeführung unverlierbar angeordneten und mit der, den jeweiligen Durchbruch (23) teilweise durchgreifenden, als Sicke ausgebildeten Rastnase (14) zusammenwirkenden Rastfeder (4) zur Einhandbedienung aufweist.

2. Steckverbindung nach Anspruch 1, **dadurch gekennzeichnet**, daß die etwa U-förmige Rastfeder (4) mit einem Rundteil (45) und sich daran anschließenden etwa geraden Schenkeln (46) und (48), wobei das Federende (25) etwa rechtwinklig abgebogen ist und sich an zugeordnete Anschläge (12) am Rohrstutzen (3) anlegt.

3. Steckverbindung nach einem der Ansprüche 1 oder 2, **dadurch gekennzeichnet**, daß die Rastfeder (4) in einer am Außenumfang des Rohrstutzens (2) befindlichen Nut vormontiert ist, wobei diese im wesentlichen aus durch seitlich in Umfangsrichtung zum jeweiligen Durchbruch (23) verlängert ausgebildeten und stirnseitig als Anschlag für das rechtwinklig abgebogene Federende (25) dienenden, nur einen geringen Teil des Außenumfangs des Rohrstutzens (3) einnehmenden Führungsstegen (32) besteht.

4. Steckverbindung nach einem der Ansprüche 1 bis 3, **dadurch gekennzeichnet**, daß die Rastfeder (4) in radialer Richtung (49) spreizbar ist.

5. Steckverbindung nach einem der Ansprüche 1 bis 4, **dadurch gekennzeichnet**, daß die Rastfeder (4) sich mit dem Rundteil (45) am Außenumfang des Rohrstutzens (3) anlegt.

6. Steckverbindung nach einem der Ansprüche 1 bis 5, **dadurch gekennzeichnet**, daß der Innendurchmesser des Rundteils (45) kleiner ist als der Außendurchmesser des Rohrstutzens(3).

7. Steckverbindung nach einem der Ansprüche 1 bis 6, **dadurch gekennzeichnet**, daß die Nase (14) in Längsrichtung der Außenhülse (2) gesehen eine trapezförmige Schräge (15) aufweist.

8. Steckverbindung nach einem der Ansprüche 1 bis 7, **dadurch gekennzeichnet**, daß der Rohrstutzen am Außenumfang mindestens eine Rastnocke (24) aufweist, in welche das abgewinkelte Federende (25) in aufgespreiztem Zustand der Rastfeder (4) einrasten kann.

9. Steckverbindung nach einem der Ansprüche 1 bis 8, **dadurch gekennzeichnet**, daß der Rohrstutzen (3) zum Lösen der Rastverbindung eine Ausnehmung (31) aufweist.

10. Steckverbindung nach Anspruch 1, **dadurch gekennzeichnet**, daß das Sicherungsmittel aus mindestens einer Rastzunge (35) besteht, die werkstoffeinstückig aus einem Teilbereich der Ausbuchtung (22) des Rohrstutzens (3) gebildet ist und welche sich an die zugeordnete Nase (14) anlegt.

11. Steckverbindung nach einem der Ansprüche 1 oder 10, **dadurch gekennzeichnet**, daß eine Verrastung von Außenhülse (2) und Rohrstutzen (3) durch eine Drehbewegung zwischen diesen beiden Teilen (2,3) erfolgt, wobei die Nase (14) außer Eingriff mit der Rastzunge (35) gebracht wird und sich in einer entsprechenden, im Rohrstutzen (3) vorgesehenen Rastöffnung (42) festlegt.

12. Steckverbindung nach einem der Ansprüche 1, 10 oder 11, **dadurch gekennzeichnet**, daß die Rastzunge ein radial abstehendes Griffteil (37) aufweist.

13. Steckverbindung nach einem der Ansprüche 1 oder 10 bis 12, **dadurch gekennzeichnet**, daß die Rastzunge (35) Versteifungsrippen (39) aufweist.

14. Steckverbindung nach einem der Ansprüche 1 bis 13, **dadurch gekennzeichnet**, daß die Innenhülse (1) nach Aufnahme des Schlauchs (6) radial aufgeweitet wird und der Schlauch (6) zwischen Außenhülse (2) und Innenhülse (1) klemmend gehalten wird.

15. Steckverbindung nach einem der Ansprüche 1 bis 14, **dadurch gekennzeichnet**, daß Innenhülse (1) und Außenhülse (2) aus einem einstückigen Teil gefertigt sind.

16. Steckverbindung nach einem der Ansprüche 1 bis 15, **dadurch gekennzeichnet**, daß für ein lagerichtiges Einstecken die Außenhülse (2) und der Rohrstutzen (3) mit einer Markierung (33,34) versehen sind.

## Claims

1. Plug-in connector for the connection of pipe and hose lines, particularly to be used for motor vehicle pipe line systems, which comprises an inner sleeve (1) and an outer sleeve (2), which receive between them a pipe or hose line (6), such that a pipe connecting piece (3) can be pushed over the outer sleeve (2) and is lockable with the outer sleeve (2) with the aid of a securing means, the pipe connecting piece (3) having on its outer perimeter at least one radial protrusion (22), running in the longitudinal direction, and the pipe connecting piece (3) having in the region of the protusion (22) an opening (23) in the peripheral direction, through which a portion of the securing means engages, wherein associated with the protrusion (22) is a lug (14) located on the outer sleeve (2) and with which the securing means co-operates, **characterised in that** this connector has at least one lug/opening arrangement (14, 23) on the outer sleeve/in the pipe connecting piece (2,3) with a locating spring (4) cooperating with a locating lug (14) configured as a bead and arranged on the pipe connecting piece (3) captive in a displacement guiding device formed by the respective protusion (22), the lug partially engaging in the respective opening (23), for single-handed operation.

2. Plug-in connector according to claim 1, **characterised in that** the roughly U-shaped locating spring (4) with a round portion (45) and approximately straight arms (46) and (48) connected thereto, the end of the spring (25) being bent at approximately a right angle and coming to rest against associated stops (12) on the pipe connecting piece (3).

3. Plug-in connector according to one of claims 1 or 2, **characterised in that** the locating spring (4) is pre-assembled in a groove located on the outer perimeter of the pipe connecting piece (2), said groove consisting essentially of guide webs (32) configured extended laterally in the peripheral direction to the respective opening (23), the webs serving on the end face as a stop for the spring end (25), bent at a right angle, and taking up only a small portion of the outer perimeter of the pipe connecting piece (3).

4. Plug-in connector according to one of claims 1 to 3, **characterised in that** the locating spring (4) is expandable in a radial direction (49).

5. Plug-in connector according to one of claims 1 to 4, **characterised in that** the locating spring (4) comes to rest with the round portion (45) on the outer perimeter of the pipe connecting piece (3).

6. Plug-in connector according to one of claims 1 to 5, **characterised in that** the inner diameter of the round portion (45) is smaller than the outer perimeter of the pipe connecting piece (3).

7. Plug-in connector according to one of claims 1 to 6, **characterised in that** the lug (14) has, seen in the longitudinal direction of the outer sleeve (2), a trapezoidal slope (15).

8. Plug-in connector according to one of claims 1 to 7, **characterised in that** the pipe connecting piece has at least one locking cam (24) on the outer perimeter, in which the angled end of the spring (25) can lock into the expanded state of the locating spring (4).

9. Plug-in connector according to one of claims 1 to 8, **characterised in that** the pipe connecting piece (3) has a recess (31) to release the locating connection.

10. Plug-in connector according to claim 1, **characterised in that** the securing means comprises at least one locating tongue (35), which is formed as one piece of material from a partial region of the protusion (22) of the pipe connecting piece (3) and which comes to rest on the associated lug (14).

11. Plug-in connector according to one of claims 1 or 10, **characterised in that** locking of the outer sleeve (2) and pipe connecting piece (3) comes about through a rotary movement between both of these parts (2,3), the lug (14) being brought out of engagement with the locating tongue (35) and then becoming fixed in a corresponding locating opening (42) provided in the pipe connecting piece (3).

12. Plug-in connector according to one of claims 1, 10 or 11, **characterised in that** the locating tongue has a radially projecting handle portion (37).

13. Plug-in connector according to one of claims 1 or 10 to 12, **characterised in that** the locating tongue (35) has stiffening ribs (39).

14. Plug-in connector according to one of claims 1 to 13, **characterised in that** the inner sleeve (1) is expanded radially after receiving the hose (6) and the hose (6) is held clamped between the outer sleeve (2) and the inner sleeve (1).

15. Plug-in connector according to one of claims 1 to 14, **characterised in that** the inner sleeve (1) and outer sleeve (2) are manufactured from a single part.

16. Plug-in connector according to one of claims 1 to 15, **characterised in that**, for positionally accurate insertion, the outer sleeve (2) and the pipe connecting piece (3) are provided with markings (33,34).

## Revendications

1. Raccord pour le raccordement de conduites rigides et souples, en particulier pour des systèmes de conduites rigides de véhicules automobiles, composé d'un manchon intérieur (1) et d'un manchon extérieur (2) qui reçoivent entre eux une conduite rigide ou souple (6), de sorte qu'on peut enfiler sur le manchon extérieur (2) une tubulure (3) qui peut être encliquetée sur celui-ci à l'aide d'un moyen de blocage, étant précisé que la tubulure (3) présente sur sa circonférence extérieure au moins un renflement radial (22) qui s'étend dans le sens longitudinal, et que ladite tubulure (3) comporte dans la zone de ce renflement (22), dans le sens circonférenciel, une ouverture (23) que traverse une partie du moyen de blocage, et étant précisé qu'on associe au renflement (22) une saillie (14) qui se trouve sur le manchon extérieur (2) et avec laquelle coopère le moyen de blocage, **caractérisé** en ce qu'il comporte en vue d'une manipulation à une seule main au moins un dispositif saillie/ouverture (14, 23) sur le manchon extérieur/dans la tubulure (2, 3), avec un ressort d'encliquetage (4) qui est disposé, imperdable, sur la tubulure (3), dans une glissière formée par le renflement (22), et qui coopère avec la saillie d'encliquetage (14) traversant en partie l'ouverture (23) et conçue comme une moulure.

2. Raccord selon la revendication 1, **caractérisé** en ce que le ressort d'encliquetage à peu près en U (4) est pourvu d'une partie arrondie (45) et de branches à peu près droites (46) et (48) qui font suite à celle-ci, l'extrémité de ressort (25) étant coudée à peu près à angle droit et s'appliquant contre des butées associées (12) de la tubulure (3).

3. Raccord selon la revendication 1 ou 2, **caractérisé** en ce que le ressort d'encliquetage (4) est monté préalablement dans une rainure située sur la circonférence extérieure de la tubulure (3), cette rainure se composant de nervures de guidage (32) qui forment des prolongements latéraux de l'ouverture correspondante (23), dans le sens circonférenciel, qui servent de butée, côté frontal, pour l'extrémité de ressort coudée à angle droit (25) et qui n'occupent qu'une faible partie de la circonférence extérieure de la tubulure (3).

4. Raccord selon l'une des revendications 1 à 3, **caractérisé** en ce que le ressort d'encliquetage (4) est apte à s'élargir dans le sens radial (49).

5. Raccord selon l'une des revendications 1 à 4, **caractérisé** en ce que le ressort d'encliquetage (4) s'applique avec sa partie arrondie (45) contre la circonférence extérieure de la tubulure (3).

6. Raccord selon l'une des revendications 1 à 5, **caractérisé** en ce que le diamètre intérieur de la partie arrondie (45) est inférieur au diamètre extérieur de la tubulure (3).

7. Raccord selon l'une des revendications 1 à 6, **caractérisé** en ce que la saillie (14), considérée dans le sens longitudinal du manchon extérieur (2), présente une partie inclinée trapézoïdale (15).

8. Raccord selon l'une des revendications 1 à 7, **caractérisé** en ce que la tubulure présente sur la circonférence extérieure au moins une cannelure d'encliquetage (24) dans laquelle l'extrémité de ressort coudée (25) peut s'encliqueter, dans la position élargie du ressort d'encliquetage (4).

9. Raccord selon l'une des revendications 1 à 8, **caractérisé** en ce que la tubulure (3) présente un creux (31) pour le déblocage de la liaison par encliquetage.

10. Raccord selon la revendication 1, **caractérisé** en ce que le moyen de blocage se compose d'au moins une languette d'encliquetage (35) qui est venue de matière avec une zone partielle du renflement (22) de la tubulure (3) et qui s'applique contre la saillie associée (14).

11. Raccord selon la revendication 1 ou 10, **caractérisé** en ce qu'un encliquetage mutuel du manchon extérieur (2) et de la tubulure (3) est réalisé grâce à une rotation entre ces deux éléments (2, 3), moyennant quoi la saillie (14) est désaccouplée de la languette d'encliquetage (35) et s'immobilise dans une ouverture d'encliquetage correspondante (42) prévue dans la tubulure (3).

12. Raccord selon l'une des revendications 1, 10 ou 11, **caractérisé** en ce que la languette d'encliquetage comporte un élément de préhension (37) qui dépasse radialement.

13. Raccord selon l'une des revendications 1 ou 10 à 12, **caractérisé** en ce que la languette d'encliquetage (35) présente des nervures raidisseuses (39).

14. Raccord selon l'une des revendications 1 à 13, **caractérisé** en ce que le manchon intérieur (1) est élargi radialement après avoir reçu le tuyau (6), et le tuyau (6) est maintenu par serrage entre le manchon extérieur (2) et le manchon intérieur (1).

15. Raccord selon l'une des revendications 1 à 14, **caractérisé** en ce que le manchon intérieur (1) et le manchon extérieur (2) sont fabriqués à partir d'un élément d'une seule pièce.

16. Raccord selon l'une des revendications 1 à 15, **caractérisé** en ce que le manchon extérieur (2) et la tubulure (3) sont pourvus d'un marquage (33, 34) afin de pouvoir être emboîtés dans une position correcte.
